# FASCICULE DE BREVET EUROPEEN

(11) **EP 3 325 934 B1**
(45) Date de publication et mention de la délivrance du brevet: **04.09.2019**
(21) Numéro de dépôt: 16736886.9
(22) Date de dépôt: 11.07.2016
(51) Int. Cl.: G01M 3/22

(54) **PROCÉDÉ DE CONTRÔLE DE L'ÉTANCHÉITÉ DE PRODUITS SCELLÉS ET INSTALLATION DE DÉTECTION DE FUITES**
VERFAHREN ZUR DICHTHEITSPRÜFUNG VON VERSIEGELTEN PRODUKTEN UND LECKERKENNUNGSEINRICHTUNG
METHOD FOR CHECKING THE TIGHTNESS OF SEALED PRODUCTS AND LEAK-DETECTION FACILITY

(30) Priorité: 20.07.2015 FR 1556848
(43) Date de publication de la demande: 30.05.2018
(73) Titulaire: Pfeiffer Vacuum, 74000 Annecy (FR)
(72) Inventeur: PERRISSOUD, Alain, 74150 Thusy (FR)
(74) Mandataire: Croonenbroek, Thomas Jakob
(86) Numéro de dépôt international: PCT/EP2016/066448
(87) Numéro de publication internationale: WO 2017/012904

(56) Documents cités:
- EP-A1- 0 481 414

## Description

La présente invention concerne un procédé de contrôle de l'étanchéité de produits scellés. La présente invention concerne également une installation de détection de fuites pour la mise en oeuvre dudit procédé de contrôle.

Certains produits tels que les allumeurs d'airbags, les pacemakers ou certains composants électroniques sont scellés pour conserver leur intégrité. Pour s'assurer de l'étanchéité du scellement, on connait plusieurs procédés de détection de fuites.

Une méthode connue consiste à réaliser un test de fuites par gaz traceur hélium. Cette méthode fait appel à la détection du passage de l'hélium à travers les fuites plus aisément que les autres gaz, du fait de la petite taille de l'atome d'hélium.

Pour cela, on introduit de l'hélium dans le produit scellé avant scellement. Le produit scellé est ensuite placé dans une chambre de test étanche que l'on met sous vide. Une fois le vide approprié atteint dans la chambre de test, on recherche à l'aide d'un détecteur de fuites la présence éventuelle d'hélium dans l'atmosphère interne de la chambre de test. Ce procédé de détection de fuites à l'hélium est fiable, reproductible et de haute sensibilité. Un dispositif de détection de l'art antérieur est divulgué dans le EP0437671A1.

Une difficulté peut néanmoins survenir pour le contrôle de l'étanchéité de petits produits scellés défectueux dont la fuite est relativement importante. En effet, l'hélium éventuellement contenu dans le produit scellé peut être rapidement évacué à travers la fuite au cours de la mise sous vide de la chambre de test. De cela s'ensuit qu'une fois que la pression dans la chambre de test est suffisamment basse pour permettre sa mise en communication avec le détecteur de fuites, tout l'hélium a disparu. Il existe donc un risque de ne pas détecter un produit scellé fortement défectueux.

Une solution pour pallier cela est le test dit « à l'eau ». Cette méthode consiste à immerger le produit scellé dans un bac rempli d'eau avant qu'il ne soit testé à l'hélium. Une inspection visuelle permet de détecter l'éventuelle formation de bulles dans le bac. L'absence de bulles permet de s'assurer que le produit scellé ne présente pas de fuites importantes.

Cette méthode peut cependant ne pas être aussi fiable que le test hélium car elle dépend de l'opérateur qui peut ne pas voir les bulles et manquer la détection d'un produit scellé défectueux.

Un autre inconvénient de cette méthode est qu'elle est fastidieuse à mettre en oeuvre.

D'une part, elle doit être réalisée en complémentarité du test hélium car elle ne permet pas à elle seule de déceler de petites fuites. Deux contrôles d'étanchéité successifs doivent donc être réalisés sur les produits scellés. D'autre part, après le test à l'eau, les produits scellés doivent être complétement séchés avant de pouvoir être réintroduits dans la ligne de production.

Un des buts de la présente invention est de pallier au moins partiellement ces inconvénients en proposant un procédé et une installation de contrôle de l'étanchéité de produits scellés moins contraignants que ceux de l'état de la technique, autorisant la réalisation de tests successifs à très haute cadence.

A cet effet, l'invention a pour objet un procédé de contrôle de l'étanchéité de produits scellés comprenant une étape de chargement au cours de laquelle on place au moins un produit scellé contenant un gaz traceur dans une enceinte sous pression atmosphérique, caractérisé en ce qu'il comporte:
- une étape de prévidage au cours de laquelle on met l'enceinte contenant le au moins un produit scellé en communication avec un volume tampon sous une pression subatmosphérique pendant une durée de prévidage inférieure à 0,5 secondes,
- puis on met l'enceinte en communication avec une ligne d'analyse agencée en dérivation du volume tampon pour mesurer la concentration en gaz traceur dans l'enceinte de manière à détecter une fuite dudit au moins un produit scellé.

On peut ainsi contrôler l'étanchéité d'un produit scellé sur un cycle de quelques secondes pour un seuil de détection allant de 10⁻¹mbar.l/s à 10⁻⁸mbar.l/s, ce qui permet de réaliser une succession de tests de haute sensibilité à très haute cadence.

Selon une ou plusieurs caractéristiques du procédé de contrôle de l'étanchéité, prise seule ou en combinaison,
- la durée de prévidage est inférieure ou égale à 0,3 secondes,
- la pression subatmosphérique du volume tampon est inférieure à 1000Pa, tel qu'inférieure à 100Pa,
- le rapport du volume tampon sur le volume restant de l'enceinte contenant le au moins un produit scellé est au moins supérieur à 100, tel que supérieur à 1000,
- la mise en communication de l'enceinte contenant le au moins un produit scellé avec le volume tampon est réalisée par pilotage d'une électrovanne interposée entre l'enceinte et le volume tampon,
- on mesure la concentration en gaz traceur dans au moins deux enceintes en alternance au moyen d'une même ligne d'analyse.

Selon un exemple de réalisation du procédé de contrôle de l'étanchéité de produits scellés:
- pendant que l'on décharge au moins un produit scellé testé dans une première enceinte à pression atmosphérique puis que l'on charge au moins un produit scellé à tester dans ladite première enceinte, puis que l'on ouvre une première vanne de prévidage pour mettre la première enceinte en communication avec un premier volume tampon, on met la deuxième enceinte en communication avec la ligne d'analyse,
- puis, pendant que l'on remonte la pression dans la deuxième enceinte à la pression atmosphérique pour décharger au moins un produit scellé testé et charger au moins un produit scellé à tester, puis que l'on ouvre une deuxième vanne de prévidage pour mettre la deuxième enceinte en communication avec un deuxième volume tampon, on met la première enceinte en communication avec la ligne d'analyse.

L'invention a aussi pour objet une installation de détection de fuites pour la mise en oeuvre d'un procédé de contrôle de l'étanchéité de produits scellés tel que décrit précédemment, comprenant :
- au moins une enceinte destinée à recevoir au moins un produit scellé contenant un gaz traceur,
- au moins une vanne de prévidage et au moins une vanne de détection, chaque au moins une enceinte étant raccordée à une vanne de prévidage et une vanne de détection,
- au moins un volume tampon raccordé à la au moins une vanne de prévidage, et
- une ligne d'analyse raccordée à la au moins une vanne de détection,
caractérisée en ce que :
- la au moins une vanne de prévidage et la au moins une vanne de détection sont des électrovannes, et
- l'installation de détection de fuites comporte une unité de pilotage configurée pour piloter :
   ∘ l'ouverture d'une vanne de prévidage pendant une durée de prévidage inférieure à 0,5 secondes puis,
   ∘ la fermeture de ladite vanne de prévidage et l'ouverture de la vanne de détection pour mesurer la concentration en gaz traceur dans l'enceinte par la ligne d'analyse.

Le pilotage de la fermeture de la vanne de prévidage et l'ouverture de la vanne de détection pour le passage de l'étape de prévidage à l'étape de test pouvant être automatiquement réalisé en fonction du temps écoulé, il n'est plus nécessaire d'utiliser un capteur de pression pour déterminer le moment de ce basculement. Le passage de l'étape de prévidage à l'étape de test est ainsi plus rapide car on s'affranchit du temps de réponse d'un capteur de pression.

Selon une ou plusieurs caractéristiques de l'installation de détection de fuites, prise seule ou en combinaison,
- le rapport du volume tampon sur le volume restant entourant le au moins un produit scellé est au moins supérieur à 100, tel que supérieur ou égal à 1000.
- le volume tampon est supérieur à 1000cm³.
- l'installation de détection de fuites comporte une canalisation définissant un volume tampon présentant un diamètre de 25mm et une longueur supérieure à 1m.
- la ligne d'analyse comporte un détecteur de fuites comprenant un spectromètre de masse.

D'autres avantages et caractéristiques apparaîtront à la lecture de la description de l'invention, ainsi que des dessins annexés sur lesquels :
- la figure 1 est une vue schématique d'une installation de détection de fuites selon un premier exemple de réalisation,
- la figure 2 est un organigramme représentant différentes étapes du procédé de contrôle de l'étanchéité de produits scellés, et
- la figure 3 est une vue schématique d'un deuxième exemple de réalisation d'une installation de détection de fuites.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

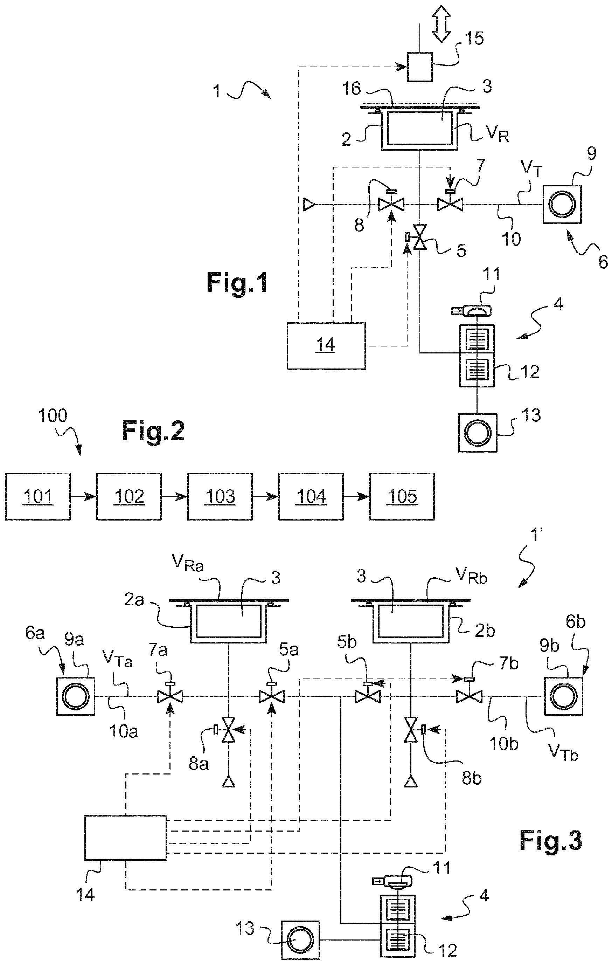

La figure 1 représente une installation de détection de fuites 1 selon un premier mode de réalisation.

L'installation de détection de fuites 1 comporte une enceinte 2 destinée à recevoir au moins un produit scellé 3 contenant un gaz traceur, une ligne d'analyse raccordée à l'enceinte 2 via une vanne de détection 5 et un dispositif de prévidage 6 raccordé à l'enceinte 2 via une vanne de prévidage 7. La ligne d'analyse est ainsi agencée en dérivation du volume tampon V_{T}.

Le produit scellé 3 contient un élément à protéger dans une atmosphère interne qui a été enrichi en gaz traceur avant scellement (par exemple par soudure). Les produits scellés 3 sont par exemple des allumeurs d'airbags, pacemakers ou certains composants électroniques. Ils proviennent notamment de l'industrie automobile, électronique ou des appareils médicaux.

On utilise généralement l'hélium ou l'hydrogène comme gaz traceur car ces gaz traversent les petites fuites plus aisément que les autres gaz, du fait de la petite taille de leur atome ou molécule.

Le dispositif de prévidage 6 comporte un premier dispositif de pompage 9 et une canalisation 10. La canalisation 10 raccorde la vanne de prévidage 7 à l'aspiration du premier dispositif de pompage 9 en définissant un volume tampon V_{T}.

Le volume entourant le au moins un produit scellé 3 est le volume restant V_{R}. On définit le volume restant V_{R} par le volume de l'enceinte 2 auquel on soustrait le volume du au moins un produit scellé 3 qu'elle contient et auquel on ajoute les volumes situés entre l'enceinte 2 et la vanne de prévidage 7, entre l'enceinte 2 et une vanne d'entrée d'air 8 le cas échéant, et entre l'enceinte 2 et la vanne de détection 5. La vanne d'entrée d'air 8 raccordée à l'enceinte 2 permet de mettre l'enceinte 2 en communication avec l'atmosphère extérieure ou avec un gaz neutre.

L'enceinte 2, la vanne de prévidage 7, la vanne d'entrée d'air 8, la vanne de détection 5 et la canalisation 10 sont telles que le rapport du volume tampon V_{T} sur le volume restant V_{R} entourant le au moins un produit scellé 3 est au moins supérieur à 100, tel que supérieur ou égal à 1000.

Ainsi on prévoit un volume restant V_{R} le plus petit possible, par exemple inférieur ou égal à 1cm³. Pour cela, on rapproche la vanne de prévidage 7, la vanne d'entrée d'air 8 et la vanne de détection 5 de l'enceinte 2 et on dimensionne l'enceinte 2 pour qu'elle présente des dimensions légèrement supérieures au volume du ou des produits scellés 3 qu'elle est destinée contenir.

On prévoit en outre un volume tampon V_{T} relativement important, au moins supérieur à 1000cm³. Pour cela, la canalisation 10 peut comporter au moins un conduit présentant un diamètre de 25mm et une longueur supérieure à 1 mètre, telle que de l'ordre de 2 mètres.

Le premier dispositif de pompage 9 comporte par exemple une pompe à vide primaire, telle qu'une pompe à palettes, par exemple bi-étagée, qui aspire les gaz et les refoule à la pression atmosphérique avec un débit de pompage par exemple compris entre 15 et 20m³/h.

La ligne d'analyse comporte un détecteur de fuites 4.

Le détecteur de fuites 4 comporte un deuxième dispositif de pompage 12, 13 et un dispositif d'analyse des gaz 11 pour mesurer la concentration d'une espèce gazeuse utilisée comme gaz traceur.

Le deuxième dispositif de pompage 12, 13 comporte par exemple une pompe à vide secondaire 12, telle qu'une pompe turbomoléculaire et une pompe à vide primaire 13 montées en série, la pompe à vide secondaire 12 étant agencée en amont de la pompe à vide primaire 13 dans le sens d'écoulement des gaz. La pompe à vide primaire 13 est par exemple une pompe à palettes, par exemple bi-étagée, telle que celle du dispositif de prévidage 6 ou une petite pompe à vide primaire sèche. La pompe à vide secondaire 12 présente par exemple une vitesse de pompage à l'aspiration de la pompe, comprise entre 50l/s et 150l/s.

Le dispositif d'analyse des gaz 11 est par exemple un spectromètre de masse.

De façon connue en soi, le spectromètre de masse comporte une cellule de mesure comprenant une cage d'ionisation et un émetteur d'électrons, tel qu'un filament électrique chauffé. Les molécules du gaz à analyser sont bombardées par le faisceau d'électrons et ionisées. Ces particules ionisées sont ensuite accélérées par un champ électrique et soumise à un champ magnétique, qui dévie les trajectoires des particules ionisées en fonction de leur masse. Le courant de particules ionisées du gaz traceur est proportionnel à la pression partielle du gaz dans l'installation, et sa mesure permet de connaître la valeur du débit de la fuite détectée.

Le dispositif d'analyse des gaz 11 est par exemple raccordé à l'aspiration de la pompe à vide secondaire 12.

La vanne de détection 5 est raccordée au deuxième dispositif de pompage 12, 13 par exemple au niveau d'un étage de compression intermédiaire de la pompe à vide secondaire 12. La cellule de mesure du dispositif d'analyse des gaz 11 est ainsi sous une basse pression de l'ordre de 10⁻⁴mbars. On protège ainsi la cellule de mesure du dispositif d'analyse des gaz 11 des rétrodiffusions de gaz par l'étage de compression intermédiaire.

La vanne de prévidage 7, la vanne de détection 5 et la vanne d'entrée d'air 8 sont pilotables par une unité de pilotage 14 de l'installation de détection de fuites 1, telle qu'un ordinateur. Les vannes de prévidage 7, de détection 5 et d'entrée d'air 8 sont pour cela des électrovannes, telles que des vannes électromagnétiques.

Nous allons maintenant décrire un cycle de contrôle de l'étanchéité de produits scellés.

On considère que le premier dispositif de pompage 9, le deuxième dispositif de pompage 11, 12 et le dispositif d'analyse des gaz 11 sont opérationnels et fonctionnent sans interruption.

Au démarrage d'un cycle, la vanne de prévidage 7 et la vanne de détection 5 sont fermées. La pression subatmosphérique du volume tampon V_{T} est par définition inférieure à la pression atmosphérique. Elle est avantageusement inférieure à 1000Pa (ou 10mbar), telle qu'inférieure à 100Pa (ou 1mbar).

Au cours d'une étape de chargement 101, on place au moins un produit scellé 3 qui a été scellé au préalable sous atmosphère de gaz traceur, dans l'enceinte 2. La pression dans l'enceinte 2 est la pression atmosphérique de l'atmosphère régnant à l'extérieur de l'enceinte 2.

On ferme la vanne d'entrée d'air 8 et on ferme l'enceinte 2 de manière étanche.

Puis, au cours d'une étape de prévidage 102, on met l'enceinte 2 contenant le au moins un produit scellé 3 en communication avec un volume tampon V_{T} à pression subatmosphérique pendant une durée de prévidage inférieure à 0,5 secondes. Pour cela, on ouvre la vanne de prévidage 7 séparant l'enceinte 2 de la canalisation 10.

La durée de prévidage est par exemple inférieure ou égale à 0,3 secondes, telle que comprise entre 0,1 secondes et 0,3 secondes.

L'ouverture de la vanne de prévidage 7 pendant quelques dixièmes de secondes équilibre les pressions entre le volume restant V_{R} et le volume tampon V_{T}. Le rapport des volumes entre le volume restant V_{R} et le volume tampon V_{T} permet d'abaisser la pression dans le volume restant V_{R} depuis la pression atmosphérique jusqu'à une basse pression de l'ordre de l'ordre de 1mbar, quasiment instantanément au lieu de plusieurs secondes. Par conséquent, si au moins un produit scellé 3 est défectueux, du gaz traceur va s'échapper du produit scellé 3 à travers la fuite et se répandre dans l'enceinte 2 sans avoir le temps d'être évacué par le premier dispositif de pompage 9.

A la fin de la durée de prévidage, la pression dans l'enceinte 2 est suffisamment basse pour autoriser l'ouverture de la vanne de détection 5 permettant la mise en communication de la ligne d'analyse avec l'enceinte 2.

On ferme alors la vanne de prévidage 7 isolant le dispositif de prévidage 6 de l'enceinte 2 et on ouvre la vanne de détection 5 pour mettre l'enceinte 2 en communication avec le détecteur de fuites 4 (étape de test 103).

La pression du volume restant V_{R} s'abaisse par exemple jusqu'à une basse pression comprise entre 10⁻²mbars et 10⁻³mbars.

Le gaz traceur éventuellement présent dans l'enceinte 2 en cas de produit scellé 3 défectueux peut alors être détecté par le détecteur de fuites 4, même dans le cas de petits produits scellés 3 présentant une fuite importante.

Simultanément, la fermeture de la vanne de prévidage 7 permet d'abaisser la pression du volume tampon V_{T} dans la canalisation 10 par le premier dispositif de pompage 9.

Puis, au cours d'une étape de remise à la pression atmosphérique 104, on ferme la vanne de détection 5 et on ouvre la vanne d'entrée d'air 8. La pression dans l'enceinte 2 remonte ainsi à la pression atmosphérique. L'enceinte 2 peut alors être ouverte pour sortir le au moins un produit scellé 3 testé (étape de déchargement 105) et on peut charger au moins un nouveau produit scellé 3 à tester (étape de chargement 101).

Un seul test permet ainsi de déceler à la fois une petite fuite ou une grosse fuite du produit scellé 3.

Le procédé de contrôle de l'étanchéité 100 est en outre tout ou partie automatisé. On prévoit en particulier que la mise en communication de l'enceinte 2 avec le volume tampon V_{T} ou avec la ligne d'analyse soit réalisée de manière automatique.

Ainsi, l'unité de pilotage 14 est configurée notamment pour piloter :
- l'ouverture de la vanne de prévidage 7 pendant la durée de prévidage au cours de l'étape de prévidage 102, les vannes de détection 5 et d'entrée d'air 8 étant pilotées en fermeture, puis
- la fermeture de la vanne de prévidage 7 et l'ouverture de la vanne de détection 5 au cours de l'étape de test 103 pour mesurer la concentration en gaz traceur dans l'enceinte 2 par le dispositif d'analyse des gaz 11 du détecteur de fuites 4, puis
- la fermeture de la vanne de détection 5 et l'ouverture de la vanne d'entrée d'air 8 au cours de l'étape de remise à pression atmosphérique 104.

Le pilotage de la fermeture de la vanne de prévidage 7 et l'ouverture de la vanne de détection 5 pour le passage de l'étape de prévidage 102 à l'étape de test 103 étant automatiquement réalisé en fonction du temps écoulé, il n'est plus nécessaire d'utiliser un capteur de pression pour déterminer le moment de ce basculement. Le passage de l'étape de prévidage 102 à l'étape de test 103 est ainsi plus rapide car on s'affranchit du temps de réponse d'un capteur de pression.

Egalement, l'ouverture et la fermeture de la porte 16 de l'enceinte 2 peuvent être pilotées par l'unité de pilotage 14 qui peut aussi piloter un robot 15 de l'installation de détection 1 pour saisir et déplacer le produit scellé 3 dans ou hors de l'enceinte 2 afin d'automatiser le chargement et le déchargement des produits scellés 3 au cours des étapes de chargement 101 et de déchargement 105.

On peut ainsi contrôler l'étanchéité d'un produit scellé 3 sur un cycle (étapes 101 à 105) de quelques secondes pour un seuil de détection allant de 10⁻¹mbar.l/s à 10⁻⁸mbar.l/s, ce qui permet de réaliser une succession de tests de haute sensibilité à très haute cadence. La cadence est en outre garantie de fait de la gestion automatique du cycle.

La figure 3 montre une variante de réalisation de l'installation de détection de fuites 1' pour la mise en oeuvre du procédé de contrôle de l'étanchéité de produits scellés 100.

L'installation de détection de fuites 1' comprend une première et une deuxième enceintes 2a, 2b, destinées à recevoir chacune au moins un produit scellé 3, un premier et un deuxième dispositifs de prévidage 6a, 6b, une première vanne de détection 5a raccordée à la première enceinte 2a et une deuxième vanne de détection 5b raccordée à la deuxième enceinte 2b.

Le premier dispositif de prévidage 6a est raccordé à la première enceinte 2a par une première vanne de prévidage 7a et le deuxième dispositif de prévidage 6b est raccordé à la deuxième enceinte 2b par une deuxième vanne de prévidage 7b.

Les première et deuxième vannes de détection 5a, 5b sont raccordées à une unique ligne d'analyse.

On prévoit en outre que l'unité de pilotage 14 soit configurée pour piloter l'ouverture de l'une des deux vannes de détection 5a, 5b à la fois, pour mesurer la concentration en gaz traceur en alternance dans les deux enceintes 2a, 2b par la ligne d'analyse.

Ainsi, au cours d'un cycle de contrôle de l'étanchéité de produits scellés, pendant que l'on décharge le au moins un produit scellé 3 testé puis que l'on charge au moins un produit scellé 3 à tester dans la première enceinte 2a à pression atmosphérique (étapes de déchargement 104 et de chargement 101), puis que l'on ouvre la première vanne de prévidage 7a pour mettre la première enceinte 2a en communication avec le premier volume tampon V_{Ta} de la première canalisation 10a (étape de prévidage 102), on ouvre la deuxième vanne de détection 5b pour mettre la deuxième enceinte 2b en communication avec le détecteur de fuites 4 (étape de test 103).

Le gaz traceur éventuellement présent dans la deuxième enceinte 2b en cas de produit scellé 3 défectueux peut alors être détecté par le détecteur de fuites 4. Simultanément, la pression du deuxième volume tampon V_{Tb} isolé de la deuxième enceinte 2b par la fermeture de la deuxième vanne de prévidage 7b est abaissée dans la deuxième canalisation 10b par le deuxième dispositif de pompage 9b.

Puis, pendant que l'on ferme la deuxième vanne de détection 5b et que l'on ouvre la vanne d'entrée d'air 8 pour remonter la pression dans la deuxième enceinte 2b à la pression atmosphérique pour décharger puis charger au moins un produit scellé 3 (étapes de déchargement 104 et de chargement 101), puis que l'on ouvre la deuxième vanne de prévidage 7a sur le deuxième volume tampon V_{Tb} (étape de prévidage 102), on ouvre la première vanne de détection 5a pour mettre la première enceinte 2a en communication avec le détecteur de fuites 4 (étape de test 103). Simultanément, la pression du premier volume tampon V_{Tb} isolé de la première enceinte 2a par la fermeture de la première vanne de prévidage 7a est abaissée dans la première canalisation 10a par le premier dispositif de pompage 9a.

La mesure de la concentration en gaz traceur dans une enceinte peut ainsi être réalisée en temps masqué, c'est-à-dire pendant le temps nécessaire pour remettre l'enceinte à pression atmosphérique, décharger le produit scellé 3 testé et charger un nouveau produit scellé 3 à tester et abaisser la pression dans l'enceinte (étapes de déchargement 104, de chargement 101 et de prévidage 102).

On peut ainsi doubler la cadence de mesure des produits scellés 3.

## Revendications

1. Procédé de contrôle de l'étanchéité de produits scellés (100) comprenant une étape de chargement (101) au cours de laquelle on place au moins un produit scellé (3) contenant un gaz traceur dans une enceinte (2 ; 2a, 2b) sous pression atmosphérique, **caractérisé en ce qu'**il comporte:
- une étape de prévidage (102) au cours de laquelle on met l'enceinte (2 ; 2a, 2b) contenant le au moins un produit scellé (3) en communication avec un volume tampon (V_{T}; V_{Ta}, V_{Tb}) sous une pression subatmosphérique pendant une durée de prévidage inférieure à 0,5 secondes,
- puis on met l'enceinte (2 ; 2a, 2b) en communication avec une ligne d'analyse agencée en dérivation du volume tampon (V_{T} ; V_{Ta}, V_{Tb}) pour mesurer la concentration en gaz traceur dans l'enceinte (2 ; 2a, 2b) de manière à détecter une fuite dudit au moins un produit scellé (3).

2. Procédé de contrôle de l'étanchéité (100) selon la revendication précédente, **caractérisé en ce que** la durée de prévidage est inférieure ou égale à 0,3 secondes.

3. Procédé de contrôle de l'étanchéité (100) selon l'une des revendications précédentes, **caractérisé en ce que** la pression subatmosphérique du volume tampon (V_{T} ; V_{Ta}, V_{Tb}) est inférieure à 1000Pa, tel qu'inférieure à 100Pa.

4. Procédé de contrôle de l'étanchéité (100) selon l'une des revendications précédentes, **caractérisé en ce que** le rapport du volume tampon (V_{T}; V_{Ta}, V_{Tb}) sur le volume restant (V_{R}; V_{Ra}, V_{Rb}) de l'enceinte (2 ; 2a, 2b) contenant le au moins un produit scellé (3) est au moins supérieur à 100, tel que supérieur à 1000.

5. Procédé de contrôle de l'étanchéité (100) selon l'une des revendications précédentes, **caractérisé en ce que** la mise en communication de l'enceinte (2 ; 2a, 2b) contenant le au moins un produit scellé (3) avec le volume tampon (V_{T} ; V_{Ta}, V_{Tb}) est réalisée par pilotage d'une électrovanne (7 ; 7a, 7b) interposée entre l'enceinte (2 ; 2a, 2b) et le volume tampon (V_{T} ; V_{Ta}, V_{Tb}).

6. Procédé de contrôle de l'étanchéité (100) selon l'une des revendications précédentes, **caractérisé en ce qu'**on mesure la concentration en gaz traceur dans au moins deux enceintes (2a, 2b) en alternance au moyen d'une même ligne d'analyse.

7. Procédé de contrôle de l'étanchéité (100) selon l'une des revendications précédentes, **caractérisé en ce que** :
- pendant que l'on décharge au moins un produit scellé testé dans une première enceinte à pression atmosphérique puis que l'on charge au moins un produit scellé à tester dans ladite première enceinte (104, 101), puis que l'on ouvre une première vanne de prévidage pour mettre la première enceinte en communication avec un premier volume tampon (102), on met la deuxième enceinte en communication avec la ligne d'analyse (103),
- puis, pendant que l'on remonte la pression dans la deuxième enceinte à la pression atmosphérique pour décharger au moins un produit scellé testé et charger au moins un produit scellé à tester (104, 101), puis que l'on ouvre une deuxième vanne de prévidage pour mettre la deuxième enceinte en communication avec un deuxième volume tampon (102), on met la première enceinte en communication avec la ligne d'analyse (103).

8. Installation de détection de fuites (1 ; 1') pour la mise en oeuvre d'un procédé de contrôle de l'étanchéité de produits scellés (100) selon l'une des revendications précédentes, comprenant :
- au moins une enceinte (2 ; 2a, 2b) destinée à recevoir au moins un produit scellé (3) contenant un gaz traceur,
- au moins une vanne de prévidage (7 ; 7a, 7b) et au moins une vanne de détection (5 ; 5a, 5b), chaque au moins une enceinte (2 ; 2a, 2b) étant raccordée à une vanne de prévidage (7 ; 7a, 7b) et une vanne de détection (5 ; 5a, 5b),
- au moins un volume tampon (V_{T} ; V_{Ta}, V_{Tb}) raccordé à la au moins une vanne de prévidage (7 ; 7a, 7b), et
- une ligne d'analyse raccordée à la au moins une vanne de détection (5 ; 5a, 5b),
**caractérisée en ce que** :
- la au moins une vanne de prévidage (7 ; 7a, 7b) et la au moins une vanne de détection (5 ; 5a, 5b) sont des électrovannes, et
- l'installation de détection de fuites (1 ; 1') comporte une unité de pilotage (14) configurée pour piloter :
∘ l'ouverture d'une vanne de prévidage (7 ; 7a, 7b) pendant une durée de prévidage inférieure à 0,5 secondes puis,
∘ la fermeture de ladite vanne de prévidage (7 ; 7a, 7b) et l'ouverture de la vanne de détection (5 ; 5a, 5b) pour mesurer la concentration en gaz traceur dans l'enceinte (2 ; 2a, 2b) par la ligne d'analyse.

9. Installation de détection de fuites (1 ; 1') selon la revendication précédente, **caractérisée en ce que** le rapport du volume tampon (V_{T} ; V_{Ta}, V_{Tb}) sur le volume restant (V_{R}; V_{Ra}, V_{Rb}) entourant le au moins un produit scellé (3) est au moins supérieur à 100, tel que supérieur ou égal à 1000.

10. Installation de détection de fuites (1 ; 1') selon l'une des revendications 8 ou 9, **caractérisée en ce que** le volume tampon (V_{T}; V_{Ta}, V_{Tb}) est supérieur à 1000cm³.

11. Installation de détection de fuites (1 ; 1') selon l'une des revendications 8 à 10, **caractérisée en ce qu'**elle comporte une canalisation (10 ; 10a, 10b) définissant un volume tampon (V_{T}; V_{Ta}, V_{Tb}) présentant un diamètre de 25mm et une longueur supérieure à 1mètre.

12. Installation de détection de fuites (1 ; 1') selon l'une des revendications 8 à 11, **caractérisée en ce que** la ligne d'analyse comporte un détecteur de fuites (4) comprenant un spectromètre de masse.

## Patentansprüche

1. Verfahren zur Prüfung der Dichtheit von versiegelten Produkten (100), umfassend einen Aufgabeschritt (101), bei dem mindestens ein versiegeltes Produkt (3), das ein Spürgas enthält, in einer Kammer (2; 2a, 2b) unter atmosphärischem Druck platziert wird, **dadurch gekennzeichnet, dass** es umfasst:
- einen Vorevakuierungsschritt (102), bei dem die Kammer (2; 2a, 2b), die das mindestens eine versiegelte Produkt (3) enthält, mit einem Puffervolumen (V_{T}; V_{Ta}, V_{Tb}) unter einem Unteratmosphärendruck während einer Vorevakuierungsdauer von weniger als 0,5 Sekunden in Verbindung gebracht wird,
- dann die Kammer (2; 2a, 2b) mit einer Analyseleitung in Verbindung gebracht wird, die abzweigend vom Puffervolumen (V_{T}; V_{Ta}, V_{Tb}) angeordnet ist, um die Spürgaskonzentration in der Kammer (2; 2a, 2b) zu messen, so dass eine Leckage aus dem mindestens einen versiegelten Produkt (3) detektiert wird.

2. Verfahren zur Prüfung der Dichtheit (100) nach dem vorhergehenden Anspruch, **dadurch gekennzeichnet, dass** die Vorevakuierungsdauer höchstens 0,3 Sekunden beträgt.

3. Verfahren zur Prüfung der Dichtheit (100) nach einem der vorhergehenden Ansprüche, **dadurch gekennzeichnet, dass** der Unteratmosphärendruck des Puffervolumens (V_{T}; V_{Ta}, V_{Tb}) geringer als 1000 Pa ist, wie etwa geringer als 100 Pa.

4. Verfahren zur Prüfung der Dichtheit (100) nach einem der vorhergehenden Ansprüche, **dadurch gekennzeichnet, dass** das Verhältnis des Puffervolumens (V_{T}; V_{Ta}, V_{Tb}) zum Restvolumen (V_{R}; V_{Ra}, V_{Rb}) der Kammer (2; 2a, 2b), die das mindestens eine versiegelte Produkt (3) enthält, mindestens größer als 100 ist, wie etwa größer als 1000.

5. Verfahren zur Prüfung der Dichtheit (100) nach einem der vorhergehenden Ansprüche, **dadurch gekennzeichnet, dass** das Inverbindungbringen der Kammer (2; 2a, 2b), die das mindestens eine versiegelte Produkt (3) enthält, mit dem Puffervolumen (V_{T}; V_{Ta}, V_{Tb}) durch Ansteuern eines Magnetventils (7; 7a, 7b) ausgeführt wird, das zwischen der Kammer (2; 2a, 2b) und dem Puffervolumen (V_{T}; V_{Ta}, V_{Tb}) angeordnet ist.

6. Verfahren zur Prüfung der Dichtheit (100) nach einem der vorhergehenden Ansprüche, **dadurch gekennzeichnet, dass** die Spürgaskonzentration in mindestens zwei Kammern (2a, 2b) abwechselnd mittels derselben Analyseleitung gemessen wird.

7. Verfahren zur Prüfung der Dichtheit (100) nach einem der vorhergehenden Ansprüche, **dadurch gekennzeichnet, dass**:
- während mindestens ein getestetes versiegeltes Produkt aus einer ersten Kammer bei atmosphärischem Druck entnommen wird, dann mindestens ein zu testendes Produkt in die erste Kammer (104, 101) gegeben wird, dann ein erstes Vorevakuierungsventil geöffnet wird, um die erste Kammer in Verbindung mit einem ersten Puffervolumen (102) zu bringen, die zweite Kammer in Verbindung mit der Analyseleitung (103) gebracht wird,
- dann, während der Druck in der zweiten Kammer wieder auf den atmosphärischen Druck erhöht wird, um mindestens ein getestetes versiegeltes Produkt zu entnehmen und mindestens ein zu testendes versiegeltes Produkt (104, 101) hineinzugeben, dann ein zweites Vorevakuierungsventil geöffnet wird, um die zweite Kammer in Verbindung mit einem zweiten Puffervolumen (102) zu bringen, die erste Kammer in Verbindung mit der Analyseleitung (103) gebracht wird.

8. Leckagedetektionsanlage (1; 1') zur Umsetzung eines Verfahrens zur Prüfung der Dichtheit von versiegelten Produkten (100) nach einem der vorhergehenden Ansprüche, umfassend:
- mindestens eine Kammer (2; 2a, 2b), die dazu bestimmt ist, mindestens ein versiegeltes Produkt (3) aufzunehmen, das ein Spürgas enthält,
- mindestens ein Vorevakuierungsventil (7; 7a, 7b) und mindestens ein Detektionsventil (5; 5a, 5b), wobei jede mindestens eine Kammer (2; 2a, 2b) an ein Vorevakuierungsventil (7; 7a, 7b) und ein Detektionsventil (5; 5a, 5b) angeschlossen ist,
- mindestens ein Puffervolumen (V_{T}; V_{Ta}, V_{Tb}), das an das mindestens eine Vorevakuierungsventil (7; 7a, 7b) angeschlossen ist, und
- eine Analyseleitung, die an das mindestens eine Detektionsventil (5; 5a, 5b) angeschlossen ist, **dadurch gekennzeichnet, dass**:
- das mindestens eine Vorevakuierungsventil (7; 7a, 7b) und das mindestens eine Detektionsventil (5; 5a, 5b) Magnetventile sind und
- die Leckagedetektionsanlage (1; 1') eine Ansteuerungseinheit (14) aufweist, die dazu ausgestaltet ist, Folgendes anzusteuern:
∘ das Öffnen eines Vorevakuierungsventils (7; 7a, 7b) während einer Vorevakuierungsdauer von weniger als 0,5 Sekunden, dann
∘ das Schließen des Vorevakuierungsventils (7; 7a, 7b) und das Öffnen des Detektionsventils (5; 5a, 5b), um die Spürgaskonzentration in der Kammer (2; 2a, 2b) über die Analyseleitung zu messen.

9. Leckagedetektionsanlage (1; 1') nach dem vorhergehenden Anspruch, **dadurch gekennzeichnet, dass** das Verhältnis des Puffervolumens (V_{T}; V_{Ta}, V_{Tb}) zum Restvolumen (V_{R}; V_{Ra}, V_{Rb}), welches das mindestens eine versiegelte Produkt (3) umgibt, mindestens größer als 100 ist, wie etwa größer oder gleich 1000.

10. Leckagedetektionsanlage (1; 1') nach einem der Ansprüche 8 oder 9, **dadurch gekennzeichnet, dass** das Puffervolumen (V_{T}; V_{Ta}, V_{Tb}) größer als 1000 cm³ ist.

11. Leckagedetektionsanlage (1; 1') nach einem der Ansprüche 8 bis 10, **dadurch gekennzeichnet, dass** sie eine Rohrleitung (10; 10a, 10b) umfasst, die ein Puffervolumen (V_{T}; V_{Ta}, V_{Tb}) definiert, das einen Durchmesser von 25 mm und eine Länge von mehr als 1 Meter aufweist.

12. Leckagedetektionsanlage (1; 1') nach einem der Ansprüche 8 bis 11, **dadurch gekennzeichnet, dass** die Analyseleitung einen Leckagedetektor (4) aufweist, der ein Massenspektrometer umfasst.

## Claims

1. Method for monitoring the leaktightness of sealed products (100) comprising a charging stage (101) during which at least one sealed product (3) containing a tracer gas is placed in a chamber (2; 2a, 2b) under atmospheric pressure, **characterized in that** it comprises:
a pre-evacuation stage (102) during which the chamber (2; 2a, 2b) containing the at least one sealed product (3) is brought into communication with a buffer volume (VT; VTa, VTb) under a subatmospheric pressure for a pre-evacuation time of less than 0.5 second,
the chamber (2; 2a, 2b) is then brought into communication with an analysis line arranged to bypass the buffer volume (VT; VTa, VTb) in order to measure the concentration of tracer gas in the chamber (2; 2a, 2b) so as to detect a leak from the said at least one sealed product (3).

2. Method for monitoring the leaktightness (100) according to the preceding claim, **characterized in that** the pre-evacuation time is less than or equal to 0.3 second.

3. Method for monitoring the leaktightness (100) according to either of the preceding claims, **characterized in that** the subatmospheric pressure of the buffer volume (VT; VTa, VTb) is a less than 1000 Pa, such as less than 100 Pa.

4. Method for monitoring the leaktightness (100) according to one of the preceding claims, **characterized in that** the ratio of the buffer volume (VT; VTa, VTb) to the remaining volume (VR; VRa, VRb) of the chamber (2; 2a, 2b) containing the at least one sealed product (3) is at least greater than 100, such as greater than 1000.

5. Method for monitoring the leaktightness (100) according to one of the preceding claims, **characterized in that** the chamber (2; 2a, 2b) containing the at least one sealed product (3) is brought into contact with the buffer volume (VT; VTa, VTb) by controlling a solenoid valve (7; 7a, 7b) interposed between the chamber (2; 2a, 2b) and the buffer volume (VT; VTa, VTb).

6. Method for monitoring the leaktightness (100) according to one of the preceding claims, **characterized in that** the concentration of tracer gas is measured alternately in at least two chambers (2a, 2b) by means of one and the same analysis line.

7. Method for monitoring the leaktightness (100) according to one of the preceding claims, **characterized in that**:
while at least one sealed product tested in a first chamber is discharged at atmospheric pressure, then while at least one sealed product to be tested is charged into the said first chamber (104, 101) and then while a first pre-evacuation valve is opened in order to bring the first chamber into communication with a first buffer volume (102), the second chamber is brought into communication with the analysis line (103),
then, while the pressure in the second chamber is brought back to atmospheric pressure in order to discharge at least one sealed product tested and to charge at least one sealed product to be tested (104, 101), and then while a second pre-evacuation valve is opened in order to bring the second chamber into communication with a second buffer volume (102), the first chamber is brought into communication with the analysis line (103).

8. Installation for the detection of leaks (1; 1') for the implementation of a method for monitoring the leaktightness of sealed products (100) according to one of the preceding claims, comprising:
at least one chamber (2; 2a, 2b) intended to receive at least one sealed product (3) containing a tracer gas,
at least one pre-evacuation valve (7; 7a, 7b) and at least one detection valve (5; 5a, 5b), each at least one chamber (2; 2a, 2b) being connected to a pre-evacuation valve (7; 7a, 7b) and a detection valve (5; 5a, 5b),
at least one buffer volume (VT; VTa, VTb) connected to the at least one pre-evacuation valve (7; 7a, 7b), and
an analysis line connected to the at least one detection valve (5; 5a, 5b),
**characterized in that**:
the at least one pre-evacuation valve (7; 7a, 7b) and the at least one detection valve (5; 5a, 5b) are solenoid valves, and
the installation for the detection of leaks (1; 1') comprises a controlling unit (14) configured in order to control:
∘ the opening of a pre-evacuation valve (7; 7a, 7b) for a pre-evacuation time of less than 0.5 second, then
∘ the closing of the said pre-evacuation valve (7; 7a, 7b) and the opening of the detection valve (5; 5a, 5b) in order to measure the concentration of tracer gas in the chamber (2; 2a, 2b) by the analysis line.

9. Installation for the detection of leaks (1; 1') according to the preceding claim, **characterized in that** the ratio of the buffer volume (VT; VTa, VTb) to the remaining volume (VR; VRa, VRb) surrounding the at least one sealed product (3) is at least greater than 100, such as greater than or equal to 1000.

10. Installation for the detection of leaks (1; 1') according to either of Claims 8 and 9, **characterized in that** the buffer volume (VT; VTa, VTb) is greater than 1000 cm3.

11. Installation for the detection of leaks (1; 1') according to one of Claims 8 to 10, **characterized in that** it comprises a pipe (10; 10a, 10b) defining a buffer volume (VT; VTa, VTb) having a diameter of 25 mm and a length of greater than 1 metre.

12. Installation for the detection of leaks (1; 1') according to one of Claims 8 to 11, **characterized in that** the analysis line comprises a leak detector (4) comprising a mass spectrometer.
